# EUROPEAN PATENT SPECIFICATION

(11) **EP 1 657 994 B1**
(45) Date of publication and mention of the grant of the patent: **23.06.2010**
(21) Application number: 04702459.1
(22) Date of filing: 15.01.2004
(51) Int. Cl.: A47B 23/00

(54) **A UNIVERSAL BOOKHOLDER**
UNIVERSALBUCHHALTERUNG
PORTE LIVRE UNIVERSEL

(30) Priority: 26.08.2003 KR 2003059081; 30.12.2003 KR 2003100107
(43) Date of publication of application: 24.05.2006
(73) Proprietor: Cho, Soon-Ja, 507-10 Sinsa-dong, Gangnam-gu Seoul 135-887 (KR)
(72) Inventor: Rha, Sang-Hoon, Seoul 135-887 (KR)
(74) Representative: Habermann, Gert
(86) International application number: PCT/KR2004/000064
(87) International publication number: WO 2005/018381

(56) References cited:
- JP-A- 7 313 260
- JP-A- 2001 218 630
- JP-A- 2002 058 542
- KR-A- 97 061 150
- US-A- 2 585 209

## Description

### TECHNICAL FIELD

The present invention relates to a bookholder, and more particularly to a universal bookholder receiving a book in a folder type so that the book may be carried easily, thereby enabling users to read the book anywhere at any time.

### BACKGROUND ART

A bookholder is generally mounted on a table to facilitate reading a book. The bookholder basically includes a stand for putting a book thereon, a support assembly for adjusting the stand at a certain angle to conform to the level of vision, and a clamp for biasing papers of the book. There have been proposed various kinds of bookholders with such basic configuration.

However, these bookholders are designed to be used on a table in a school, library or study room, so they are not useful while a user is moving outdoors. Thus, there is a need for a portable bookholder which allows a student who is struggling for studying even on their way to school and home, or a worker who uses public transportation for commuting to enjoy reading during his/her movement, not in a limited places such as a table. Portable bookholders which are improved for easy carrying it by reducing its weight and size are also proposed. However, they are inconvenient because a user should carry a book separate from the bookholder.

JP-A-2002058542 describes a bookrack having a page holding mechanism. A rod which can be moved in the right direction by pressing an operation unit by a single hand, a receiving member and a turnable shaft are turned to lift a page holding arm. The page holding arm is detached from the lower side of the turned page, and the page of an opened book is held by the urging of a spring. The bookrack of this prior art does not include both a pair of cover members and a supporting unit between the pair of cover members for forming an inner space to receive a book therein when being folded so as to carry with a book easily, and a combination of a string longitudinally installed inside the supporting unit and a clamp mounted on the upper and/or lower end of the inner space of each cover member and a guide member installed at the upper und/or lower end of the inner space of each cover member for fixing the received book effectively in all cases.

### DISCLOSURE OF INVENTION

The present invention is designed to solve the problems of the prior art, and therefore the object of the invention is to provide a universal bookholder which is capable of receiving and carrying a book therein so that a user may read the book at any place.

Another object of the invention is to provide a bookholder by which users can read a book when he/she is lying down, standing or sitting down even without holding the book in his/her hands.

In order to accomplish the above object, the present invention provides a bookholder, which includes a pair of cover members for forming an inner space to receive a book therein when being folded and for supporting both sides of the book when being unfolded; a supporting unit combined between the pair of cover members so as to be folded with respect to the each cover member; a string longitudinally installed inside the supporting unit to fix the spine of the book; and at least one clamp installed inside the cover member and having a lifting unit for selectively fixing a height of the clamp depending on a thickness of the book so as to fix the pages of the received book.

Preferably, the supporting unit has a width selectively extendable depending on a thickness of the book.

Also preferably, the bookholder further comprises an illuminating unit for emitting light toward the book received in the cover member.

Preferably, a handle is provided on an outer surface of the supporting unit or the cover member.

Also, a plurality of concave grooves are prepared on an outer surface of the bookholder at regular intervals and a knob selectively fixed to the grooves is provided to the bookholder so as to facilitate easy grip of the bookholder during movement or reading.

According to another aspect of the invention, there is provided a bookholder comprising: a pair of cover members for forming an inner space to receive a book therein when being folded and for supporting both sides of the book when being unfolded; a supporting unit combined between the pair of cover members so as to be folded with respect to the each cover member, and having a receiving groove longitudinally formed thereon; a string longitudinally installed inside the supporting unit to fix the spine of the book; at least one clamp installed inside the cover member for fixing the pages of the received book; and a support assembly having a size corresponding to the receiving groove, and pivotally installed in the receiving groove by means of a hinge.

Preferably, the supporting unit has an inner space of which one end has an opening, and the bookholder further comprises a sliding support member received in the inner space of the supporting unit to slide into or out through the opening; at least one ring formed to connect a support string to the sliding support member; and a pair of auxiliary support arms installed on both sides of the sliding support member and capable of being bent.

More preferably, the supporting unit has an inner space of which one end has an opening, and the bookholder further comprises a case provided in the supporting unit and having an opening corresponding to the opening of the supporting unit; and a support assembly having a sliding support member received in the inner space of the case and sliding into or out through the opening of the supporting unit, wherein the support assembly is pivotally combined to the supporting unit.

Also, the bookholder further comprises a locking means for keeping the cover members unfolded.

Preferably, the locking means includes at least one push hook provided on either the supporting unit or the cover member; and a hook groove formed on either the cover member or the supporting unit so that the push hook is inserted therein.

As an alternative, the locking means includes a bar installed on one of the cover members; a concave groove formed on the other one of the cover members so that the bar is inserted therein; and a switch for biasing the bar toward the concave groove.

According to another aspect of the invention, there is provided a bookholder comprising: a pair of cover members for forming an inner space to receive a book therein when being folded and for supporting both sides of the book when being unfolded; a supporting unit combined between the pair of cover members so as to be folded with respect to the each cover member; a string longitudinally installed inside the supporting unit to fix the spine of the book; at least one guide member mounted inside the pair of cover members; and a clamp movably combined to the guide member for fixing the pages of the received book.

Preferably, the bookholder further comprises at least one support plate combined to an inner side of the cover member in order to support a book cover; and an elastic member for elastically biasing the support plate to hold up and support the book cover.

More preferably, the support plate has width and length extension units which are selectively extendable according to a size of the book respectively.

Also preferably, the support plate has an inclined portion for supporting an inclined book cover and a flat portion bent from the inclined portion for supporting the book cover.

Also, the bookholder may further comprise a position fixing unit selectively fixed to the supporting unit so as to adjust a length of the string depending on a size of the book.

Preferably, the bookholder further comprises a stand which the bookholder is installed.

More preferably, the stand includes a base; an arm extended from the base and having a plurality of joints to allow the bookholder to be located at a predetermined position; and a connector provided on an end of the arm and combined to a connector groove of the bookholder.

### BRIEF DESCRIPTION OF THE DRAWINGS

These and other features, aspects, and advantages of preferred embodiments of the present invention will be more fully described in the following detailed description, taken accompanying drawings. In the drawings:
FIG. 1 is a perspective view showing a bookholder according to an embodiment of the present invention;
FIG. 2 is a perspective view showing a bookholder according to another embodiment of the present invention;
FIG. 3 is a perspective view showing a clamp moving unit of the bookholder according to another embodiment of the present invention;
FIG. 4 is a sectional view showing a clamp moving unit of the bookholder according to another embodiment of the present invention;
FIG. 5 is a perspective view for illustrating operation of a supporting unit according to an embodiment of the present invention;
FIG. 6 is an exploded perspective view showing a support assembly according to an embodiment of the present invention;
FIG. 7 shows a supporting unit according to another embodiment of the present invention;
FIG. 8 is a sectional view showing the supporting unit of FIG. 7;
FIG. 9 is a schematic view showing a handle according to the present invention;
FIG. 10 shows that the bookholder according to an embodiment of the present invention is actually used; and
FIG. 11 shows a stand of the bookholder according to the present invention.

### BEST MODES FOR CARRYING OUT THE INVENTION

Hereinafter, preferred embodiments of the present invention will be described in detail referring to the accompanying drawings. Prior to the description, it should be understood that the terms used in the specification and appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention, so it should be understood that other equivalents and modifications could be made thereto without departing from the invention as claimed.

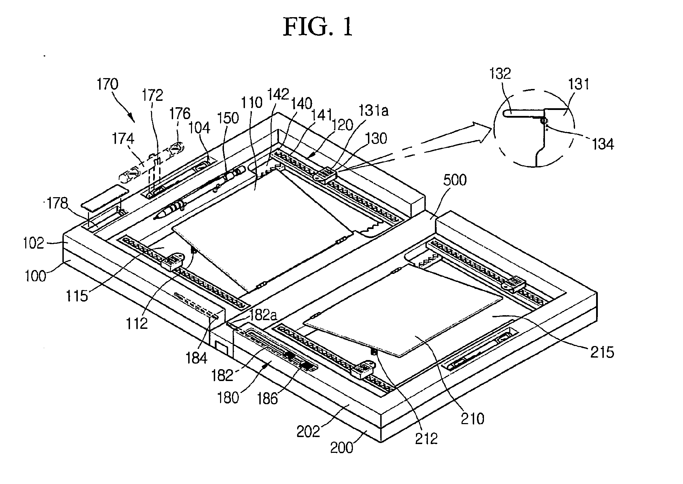

FIG. 1 is a perspective view schematically showing a bookholder according to an embodiment of the present invention. Referring to FIG. 1, the bookholder of this embodiment includes a pair of cover members 100 and 200, and a supporting unit 500 installed between the cover members 100 and 200.

One end of each cover member 100 or 200 is combined to the supporting unit 500, and the cover members 100 and 200 may be folded each other about the supporting unit 500 to thereby form an inner space for receiving a book therein.

Each cover member 100 or 200 has a sidewall 102 and 202 protruding a predetermined height on the edge. When the cover members 100 and 200 are folded, the sidewalls 102 and 202 form the inner space for receiving a book together with the supporting unit 500. That is to say, the sidewall 102 or 202 has a height matched to a half width of the supporting unit 500, so the sidewalls 102 and 202 contact each other along the center line of the supporting unit 500 forming an inner space when the cover members 100 and 200 are folded.

On the inner surface of the cover member 100 or 200 where a book is received, a support plate 110 or 210 for supporting a front or rear book cover in contact is installed. Specifically, a recess 115 or 215 is formed in the inner surface of the cover member 100 or 200 so that the support plate 110 or 210 may be rotated into the recess 115 or 215. The support plate 110 or 210 is configured to have size and thickness suitable for supporting general books.

Preferably, the support plate 110 or 210 is hinged to the cover member 100 or 200 so that it may be pivoted about the supporting unit 500. In addition, between the support plate 110 or 210 and a bottom of the recess 115 or 215 or at the hinged portion, an elastic member 112 or 212 such as a spring, a coil spring or a leaf spring may be provided to elastically and upwardly bias a book supported thereon. Alternatively, the support plate 110 or 210 may be installed on either of the cover members 100 and 200.

A clamping means 120 for fixing the received book is provided to the upper and/or lower end of the inner space of the cover members. Preferably, the clamping means 120 biases the upper and lower portion of the book in order to prevent unintentional turnover of the pages or movement of the book during reading.

The clamping means 120 includes a clamp 130 for suppressing the pages of the book and a guide member 140 for moving the clamp 130 in a horizontal direction.

Specifically, as shown in an enlarged view in a circle of FIG. 1, the clamp 130 includes a body 131 combined to the guide member 140 so as to be movable horizontally or widthwise with respect to the book, and a protrusion pressing unit 132 whose one end is pivotally combined to a front end of the body 131 to bias the pages of the book. Preferably, the protrusion pressing unit 132 is combined to the body 131 so as to be elastically pivotal by means of an elastic member 134. Thus, when a user pushes a page of the book down with pressing the protrusion pressing unit 132 in order to read the next page, the page is inserted with pivoting the protrusion pressing unit 132. The protrusion pressing unit 132 is then restored to its original position due to the elastic member, thereby fixing the page below it.

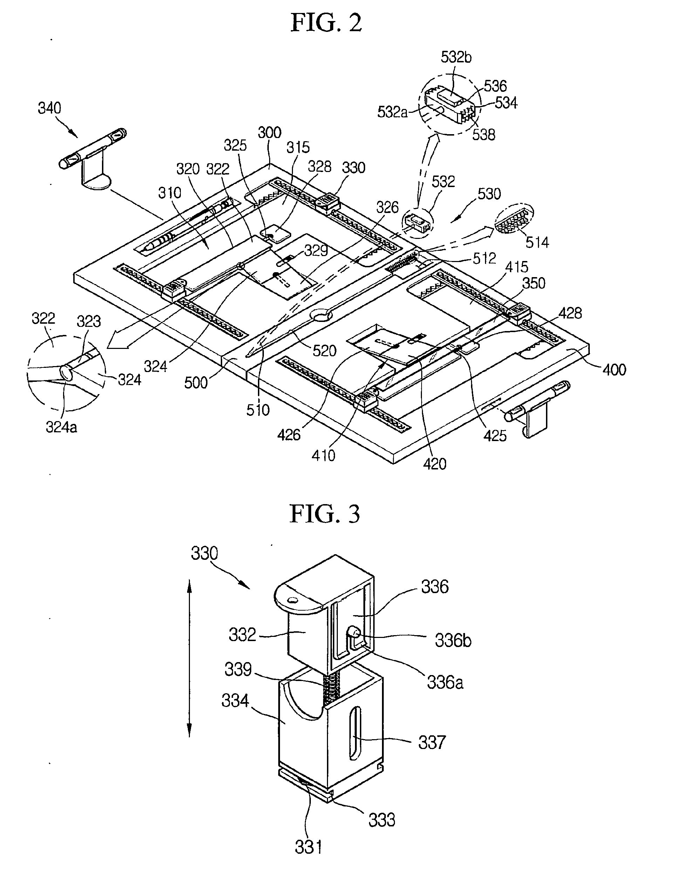

The clamp 130 can move along the guide member 140 so that a fixed portion of the page may be selected. For this purpose, a toothed member 141 for fixing a position of the clamp 130 is provided on the guide member 140, and an elastic protrusion 331 (see FIG. 3) of the clamp 130 is joined to a selected position of the toothed member 141. As a result, a position for fixing the page of the book may be determined by moving the clamp 130 in a horizontal direction and then positioning it at a certain position of the toothed member 141. At this time, an adjustment surface 131a having a rough face may be provided on the upper surface of the body 131 in order to facilitate position adjustment of the clamp 130. Such a position determining means is not limited to this embodiment, but it should be understood that various modifications may be applied thereto with the use of well-known techniques.

Preferably, according to this embodiment, the guide member 140 may be configured to be movable in the vertical direction and lengthwise with respect to the book. Specifically, a vertical guide 142 having teeth is formed on the inner side of the cover member 100 or 200, and an elastic protrusion (not shown) corresponding to the teeth is formed on the guide member 140 so that the elastic protrusion is engaged at the selected position of the vertical guide 142. Thus, a user may set a vertical position of the guide member 140 according to size of the book.

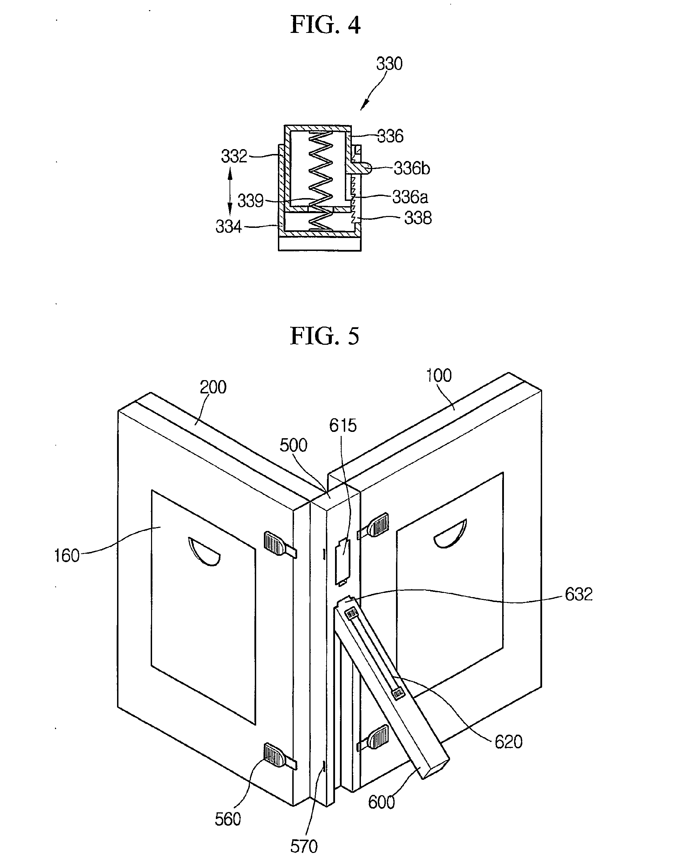

On the inner side of the cover members 100 and 200, protrusions 150 for placing a pen or pencil may be provided. The protrusions 150 are spaced a predetermined distance so that the pen or pencil may be fit therebetween. In addition, it is also possible to form a receiving space in a bottom portion of the cover member 100 or 200, and then install a cover 160 (see FIG. 5) so that writing tools or scratch papers may be stored therein.

In addition, the cover members 100 and 200 may have an illuminating unit 170 for allowing a user to read the book in the dark. Preferably, the illuminating unit 170 is formed in one or both of the sidewalls of the cover members 100 and 200, and received in an insertion groove 104 so as not to obstruct opening or closing the cover members 100 and 200.

Specifically, the illuminating unit 170 includes a rotating member 172 of which one end is hinged so as to be pivotal at the insertion groove 104, and a lamp body 174 of which a center portion is rotatably hinged to the other end of the rotating member 172. The lamp body 174 has lamps 176 at both ends, and the lamps 176 may be rotated about the lamp body 174 so as to adjust an angle of the illumination.

In addition, a power source 178 for supplying power to the illuminating unit 170 is provided to the cover member 100 and/or 200. The power source 178 is installed in the sidewall adjacent to the illuminating unit 170, and preferably adopts a battery so as to ensure power supply while the bookholder is carried.

According to this embodiment, a locking unit 180 is also provided on the bookholder in order to keep the cover members 100 and 200 unfold. Preferably, the locking unit 180 includes at least one bar 182 on the upper or lower end of one of both sidewalls 102 and 202 of the cover members 100 and 200, and a hook groove 184 formed in the other one of the sidewalls 102 and 202 of the cover members 100 and 200 so that a leading end of the bar 182 may be inserted into the hook groove 184 when the cover members 100 and 200 are open. In order to insert the bar 182 into the hook groove 184, a switch 186 combined to one end of the bar 182 and exposed outward is used to push the bar 182 toward the other sidewall having the hook groove 184. At this time, it is desirable that a protrusion 182a is formed on the end of the bar 182 and a groove (not shown) to be engaged with the protrusion 182a is formed on the end of the hook groove 184 so that the inserted bar 182 is not easily taken off the hook groove 184.

FIG. 2 is a perspective view schematically showing a bookholder according to another embodiment of the present invention. The following description will be focused on different parts to the former embodiment.

Referring to FIG. 2, the bookholder of this embodiment has a pair of cover members 300 and 400, which are folded about a supporting unit 500 interposed therebetween to form an inner space for receiving a book.

The bookholder of this embodiment does not have a sidewall, differently from the former embodiment. Instead, a clamp 330 and a string 510 installed in the inner side of the supporting unit suppress the book so that the book received between the cover members 300 and 400 and the supporting unit 500 is not loosened or deviated.

On the inner sides of the cover member 300 or 400 in which the book is received, a support plate 310 or 410 for supporting the book upward in contact with a book cover is formed in a recess 315 or 415. Preferably, the support plate 310 or 410 includes a support body 320 or 420, and width and length extension units 326, 328 or 426, 428 respectively connected on one side of the support body 320 or 420 by a rail 325 or 425 and selectively extendable so as to adjust its width and length according to the size of the book. One end of the width extension unit 326 or 426 is hinged to the recess 315 or 415 so as to be pivotal on the supporting unit 500.

The support body 320 has a flat portion 322 and an inclined portion 324. The flat portion 322 contacts with the book received in the cover members 300 and 400 together with the clamp 330, thereby fixing the book more firmly rather than an inclined state. For this purpose, the flat portion 322 is pivoted on the inclined portion 324 by means of a hinge 323 interposed between the flat portion 322 and the inclined portion 324, and supported by a support 324a provided at the lower end of the inclined portion 324, as shown in an enlarged view depicted in a circle of FIG. 2. At this time, the flat portion 322 may be elastically pivoted using a spring, not shown. If the support plate 310 is not in use, the flat portion 322 is received in the recess 315 or 415 in parallel with the inclined portion 324. At this time, the support plate which is biased upward by an elastic means (not shown) is locked with a hooking member 329 of the cover member 300 or 400.

According to this embodiment, the cover member 300 or 400 has the clamp 330 on its inner side in order to fix the pages of the received book. The clamp 330 is installed to give a pressing force opposite to a biasing direction of the support plate 310 or 410.

FIGs. 3 and 4 are perspective view and sectional view showing the clamp 330 of this embodiment. Referring to FIGs. 3 and 4, the clamp 330 has a lifting unit for selectively extending its length according to a thickness of the book. The lifting unit has a first block 332, and a second block 334 in which the first block 332 selectively moves up and down.

Specifically, the first block 332 includes an elastic hook 336 which has a hooking protrusion 336a at one side, and a release protrusion 336b adjacent to the hooking protrusion 336a.

In addition, the second block 334 has a guide slot 337 on its one sidewall, and teeth 338 formed along the inner sidewall of the second block 334.

Thus, when the first block 332 is inserted into the second block 334 downward with a spring 339 interposed therebetween, the hooking protrusion 336a of the elastic hook 336 descends along the teeth 338 by means of its own elastic force, and then when the first block 332 is stopped at a desired position, the hooking protrusion 336a of the elastic hook 336 is locked with the teeth 338 to be maintained its position.

In this state, when the release protrusion 336b is pressed by fmger in order to ascend the clamp 330, the hooking protrusion 336a is released from the teeth 338. Then, the first block 332 is ascended by the spring 339.

Here, the lifting unit, or the clamp 330, is not limited to this embodiment, but other techniques well known in the art may be applied thereto.

In addition, the elastic protrusion 331 prepared in the second block 334 as shown in FIG. 3 is selectively combined with the toothed member 141 of the guide member 140 described in the first embodiment. In addition, a guide protrusion 333 prevents the clamp 330 from leaving the guide member 140.

According to the present embodiment, an illuminating unit 340 is detachably installed at one or both sides of the cover members 300 and 400. This illuminating unit 340 is identical to the illuminating unit 170 of the previous embodiment, and not described in detail here. In addition, a support piece 350 for supporting the pages of the received book is provided on the cover members 300 and 400. In case that the book received in the cover members 300 and 400 is supported only by the clamp 330, the book is likely to pop out the bookholder when it is turned over. However, if the support piece 350 made of transparent material connects the opposite clamps 330 in the cover members 300 and 400, the book may be kept its position well, allowing a user to read the book.

According to this embodiment, the supporting unit 500 has a string 510 to keep the book received in the cover members 300 and 400 from falling off the bookholder when the bookholder is turned over. The string 510 is preferably made of elastic materials. Preferably, the string 510 may be received in a slit 520 formed in the supporting unit 500 lengthwise so as to press the center line of the open book.

Preferably, one end of the string 510 is fixed to the supporting unit, and the other end is fixed to a position fixing unit 530 which is provided on the supporting unit so as to adjust a length of the string 510 according to the size of the book.

Specifically, the position fixing unit 530 is configured as follows. A rectangular position fixing groove 512 is formed in one end of the supporting unit 500. Two stages of toothed members 514 for position fixing are longitudinally formed on at least one of the inner walls of the position fixing groove 512.

A position fixing pin 532 connected to the other end of the string 510 is selectively combined with the position fixing groove 512. This position fixing pin 532 has a body 532a, and an auxiliary body 532b on the body 532a. On both sidewalls of the body 532a, teeth 534 engaging with the toothed members 514 are provided. In addition, combination protrusions 538 and manipulation protrusion 536 linked with the combination protrusions 538 are formed on the body 532a and the auxiliary body 532b to be movable with respect to the body 532a and the auxiliary body 532b. Thus, if a user presses the manipulation protrusion 536, the combination protrusions 538 are moved into the body 532a. Preferably, the combination protrusions 538 are tapered to ease insertion.

In order to insert the position fixing pin 532 into the position fixing groove 512, the position fixing pin 532 is put so that the inclined surface of the combination protrusions 538 faces the position fixing groove 512, and then pressed. Then, the combination protrusions 538 are moved into the body 532a and then returned due to their own elasticity and hooked between the two-stage toothed members 514 of the position fixing groove 512. Also, the sidewall teeth 534 of the position fixing pin 532 are engaged with the two-stage toothed members 514 of the position fixing groove 512 and fixed there. Thus, the position fixing pin 532 is fixed by the combination protrusions 538 and the teeth 534, preventing it from getting out of the position fixing groove 512.

To the contrary, in order to release the position fixing pin 532 from the position fixing groove 512, a user pushes the manipulation protrusion 536 of the auxiliary body 532b. Then, the combination protrusions 538 moves into the body 532a, and the user may take out the position fixing pin 532.

FIG. 5 shows the supporting unit according to the former embodiment of the present invention. Here, the supporting unit of FIG. 5 may be applied to the later embodiment, not limitedly.

Referring to FIG. 5, the supporting unit 500 is provided between the cover members 100 and 200.

The supporting unit 500 includes a support assembly 600 which is adjusted at a predetermined angle so that the bookholder of the embodiment may be put on a table. The support assembly 600 is pivotal by a hinge 632 provided in a receiving groove formed along a longitudinal direction of the supporting unit. In addition, the supporting unit 500 further includes a fixing unit (not shown) for selectively fixing the support assembly 600 when the support assembly 600 is received in the receiving groove. The fixing unit may adopt various structures for attachment and detachment of the support assembly 600.

In addition, an inclination stand 615 for supporting the bookholder of this embodiment at a low angle may be pivotably mounted on the supporting unit 500. In addition, a handle 620 is attached on the surface of the support assembly 600 so that a user may insert his/her own hand or finger(s) thereto. The handle 620 may also be attached directly to the supporting unit 500 or outer sides of the cover members 300 and 400. A user may hold the handle 620 for carrying the bookholder as existing handheld bags, and particularly, the handle is useful in case that the bookholder is used not on the table but by holding with hands. That is, a user may insert his or her hand between the handle 620 and the supporting unit 500 or the cover members 300 and 400 to thereby support the bookholder, and adjust readable distance by using his/her arm. At this time, since the book is fixed by the clamp 330 and the string 510, additional support is not necessary. In doing so, the handle 620 is preferably made of various elastic materials such as an elastic band.

According to one embodiment of the present invention, the bookholder of this embodiment includes a locking unit in order to keep the cover members 100 and 200 open during reading. Preferably, the locking unit includes at least one push hook 560 provided to either the supporting unit 500 or the cover members 100 and 200, and a hook groove 570 formed in either the cover members 100 and 200 or the supporting unit 500 so that the push hook 560 is inserted therein. Thus, a user firstly unfolds the cover members 100 and 200, and then pushes the push hook 560 to be inserted into the hook groove 570, thereby keeping the cover members 100 and 200 unfolded.

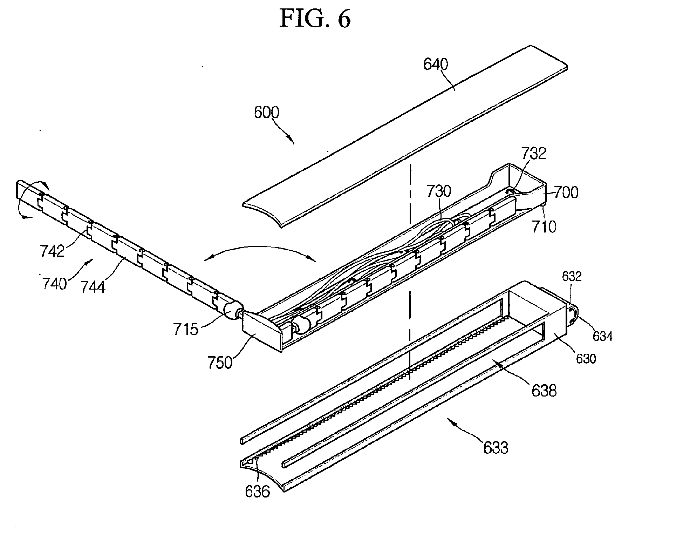

In addition, the bookholder of the present invention may be useful for reading outdoors when the support assembly 600 of the supporting unit 500 is used. Referring to FIG. 6 showing configuration of the support assembly 600, the support assembly 600 includes a case 630, and a cover 640 for covering the case 630.

The case 630 has a hinge 632 at its one end so that it may be pivotally combined to the supporting unit 500 as described above. Preferably, an angle adjustment groove 634 is formed in the hinge 632 for adjustment of a pivot angle of the support assembly 600. The angle adjustment groove 634 is selectively combined with a protrusion (not shown) formed on the supporting unit 500 so as to set a pivot angle of the support assembly 600.

According to this embodiment, the other end of the case 630 has an opening so that a sliding support member 700 may be moved in and out through the opening. The sliding support member 700 is installed so that it may be put into or taken out of the inner space formed by the case 630 and the cover 640. The sliding support member 700 may have a suitable size in accordance with the inner space.

Preferably, the sliding support member 700 is hollow to form a receiving space therein and has a plurality of rings 732 mounted on its inner bottom. The rings 732 are used for connecting a support string 730, described later. For example, a hook, not shown, tied at one end of the support string 730 may be hooked around the ring 732.

The case 630 also has a toothed hooking member 636 on its inner side in order to set a position of the sliding support member 700 when the sliding support member 700 is taken out. An elastic hook 710 of the sliding support member 700 is selectively hooked to the toothed hooking member 636 so as to fix a position of the sliding support member 700.

According to the present invention, in case the sliding support member 700 is taken out when using the bookholder, a pair of auxiliary support arms 740 may be further provided for supporting the bookholder more stably. The auxiliary support arm 740 consists of a plurality of support pieces 744 connected each other by joints 742 to be bent. In addition, one end of the auxiliary support arm 740 is combined with the sliding support member by means of a ball-type hinge so that the auxiliary support arm 740 is pivotable and rotatable in directions shown by arrows in the figure. The auxiliary support arm 740 consisting of the support pieces 744 may be bent according to the curvature of human body as described later, thereby supporting the bookholder more stably. Many well-known techniques capable of realizing such a function may be applied instead of the auxiliary support arm 740.

Preferably, at a side of the sliding support member 700, a recess portion is preferably formed so that the auxiliary support arm 740 may be positioned therein. Thus, with the auxiliary support arm 740 folded at both sides, the sliding support member 700 may be inserted into the case 630. In addition, an elongated hole 638 is preferably formed in the sidewall of the case 630. The elongated hole 638 allows the auxiliary support arm 740 to be spread out with the sliding support member 700 inserted into the case 630. For example, if the bookholder is used on an uneven place such as a bed, the support assembly 600 is installed to be inclined and then the auxiliary support arms 740 are taken out and suitably pivoted or rotated so that it may be surface-contacted on the uneven place. This allows a user to read a book stably in a lying or sitting posture.

According to this embodiment, a taking-out unit for easily taking out the sliding support member 700 from the case 630 is provided at the end of the sliding support member 700.

Preferably, the taking-out unit has a grip 750 which is configured for easy grip of a user. More preferably, the grip 750 is made of rubber, or indentation may be formed on the grip for better grip.

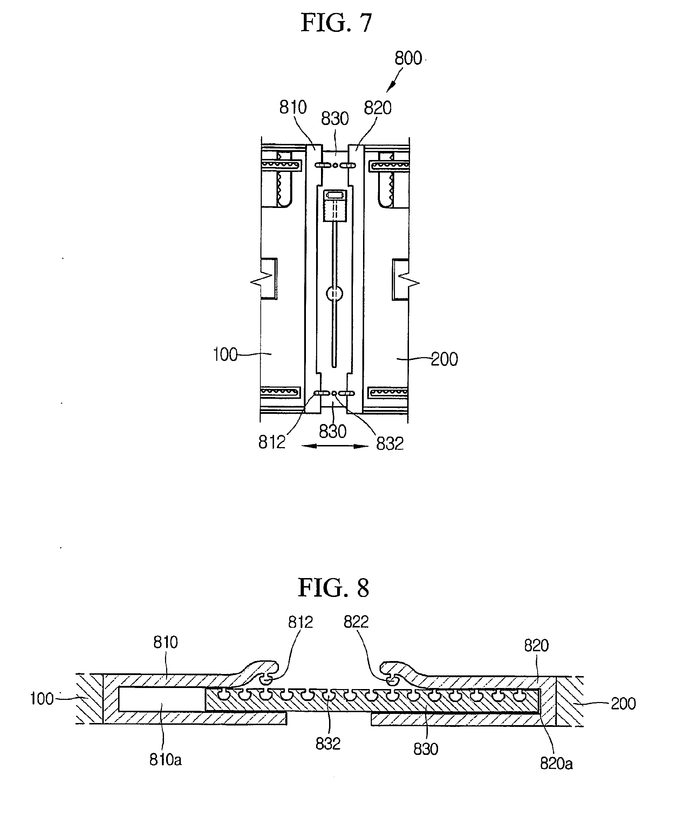

FIGs. 7 and 8 show a supporting unit according to another embodiment of the present invention. The supporting unit 800 of this embodiment is suitable for reading a book having a thickness larger than the width of the supporting unit in which the cover members are incompletely folded. Referring to FIGs. 7 and 8, the supporting unit 800 includes movable plates 810 and 820 which are folded with the cover members 100 and 200, and a fixed plate 830 whose both ends are inserted into slide grooves 810a and 820a of the movable plates 810 and 820. Thus, a width of the whole supporting unit 800 may be extended or shortened by moving the movable plates 810 and 820 in the opposite directions according to the thickness of the book.

In addition, the supporting unit 800 has a hooking unit for keeping the extended or shortened width of the supporting unit. That is to say, hooks 812 and 822 are mounted on the movable plates 810 and 820, and a plurality of hooking grooves 832 are formed on the surface of the fixed plate 830 at regular intervals along the width of the received book. As a result, by fitting the hooks 812 and 822 into the hooking groove 832, the supporting unit 800 may keep its width fixed.

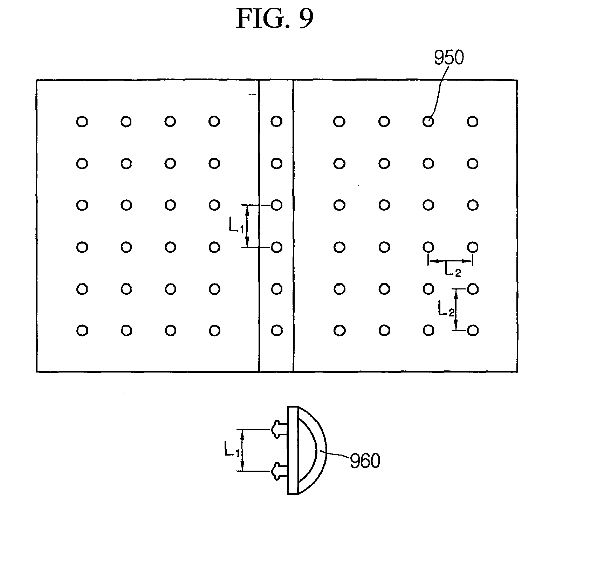

In addition, FIG. 9 shows a handle according to another embodiment of the present invention. Referring to FIG. 9, a plurality of concave grooves 950 are formed on the outer surface of the cover members at regular intervals. Preferably, a distance (L₂) between the concave grooves is identical to the distance (L₁) between legs of a knob, which acts as a handle. Thus, a user may hold the bookholder more easily by selectively combining the detachable knob 960 into a concave groove(s) 950 at a desired position.

Now, operation of the bookholder configured as described above according to the present invention is described in detail.

A user may carry a book in the bookholder according to the present invention, not putting the book into a separate folder or bag. That is to say, as shown in FIG. 1, the book is put into the inner space of the cover members 100 and 200 and then the cover members 100 and 200 are folded, the book may be received in the cover members 100 and 200 because the sidewalls 102 and 202 generates a sufficient inner space. In addition, in case that there is no sidewall as shown in FIG. 2, the book may be fixed in the cover members by using the clamp 330 and the string 510 mounted in the cover members 300 and 400 and the supporting unit 500.

The bookholder of the present invention may also be used on a fixed place such as a table. For example, the cover members 100 and 200 are unfolded straightly and then the push hook 560 prepared in the cover member is pushed into the hook groove 570 formed in the supporting unit 500. Then, the cover members 100 and 200 are not pivoted but fixed to the supporting unit 500. As an alternative, as shown in FIG. 1, the cover members 100 and 200 and the supporting unit 500 may be stably fixed to form the same surface with the use of the locking unit 180 having the bar 182 and the concave groove 184.

In this state, the support assembly 600 is pivoted backward with respect to the hinge to support the bookholder on the ground as shown in FIG. 5. Then, a user may read a book with the use of the bookholder of the present invention at a fixed place such as a table.

Meanwhile, in order to put a book on the bookholder, a user firstly sets a position of the bookholder, opens the book by its substantially half page, and then fits the position fixing pin 532 at a suitable position with putting the string 510 in the supporting unit across the spine of the book. Then, book covers are fixed in contact with the inner surfaces of the cover members 100 and 200. If the support plate is employed, the book is arranged so that the front cover of the book contacts with the support plate 110 and a rear cover contacts with the support plate 210. And then, the guide member 140 is vertically adjusted to conform to the size of book, and then a position of the clamp 130 is also set.

Subsequently, if a user pushes a page below the clamp 130 with turning over the page or presses the clamp 130, the protrusion pressing unit 132 is pivoted to pass the page as mentioned above. The protrusion pressing unit 132 then restores its origin state at once by means of the elastic member 134 so that the page is supported not to be turned. At this time, the support plate 110 in contact with the front cover of the book biases the book cover upward by means of the elastic member 112, so the page may be more stably supported between the clamp 130 and the support plate 110. The same principle may be applied to the rear cover of the book. If the book is thick, as shown in FIGs. 3 and 4, a thickness of the inner space of the cover members may be selectively adjusted with the use of the extendable clamp 330. In addition, a thicker book may be received in the bookholder by extending a width of the supporting unit 500 as shown in FIGs. 7 and 8.

According to the present invention, in the above state, since a user inserts one hand into the handle 620 on the outside of the supporting unit 500 or the cover members 100 and 200 to thereby uniformly transfer the center of weight through the arm, he/she can read the book in anyplace. Particularly, in a vehicle such as a subway or a bus a user can hold a handle of the vehicle by one hand with the other hand inserted into the handle 620 to support the bookholder as he/she likes, which enables a user to comfortably read the book when standing in a vehicle.

Also, when a user folds the cover members 100 and 200 of the bookholder after reading, the book is closed and received in the bookholder in a current state. Thus, if the bookholder is open later, the page of the book is open as it was. Thus, the user need not struggle to find the page which was being read before.

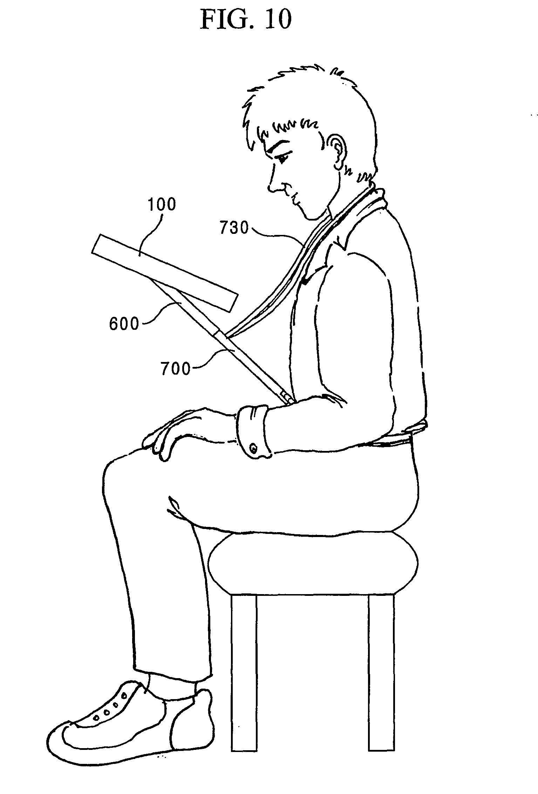

Meanwhile, as shown in FIG. 10, if a user desires to use the bookholder without the support of hands, the user pulls the handle 750 to draw out the sliding support member 700. While the sliding support member 700 is drawn out, the elastic hook 710 comes in contact with the toothed hooking member 636 to determine its position. Thus, the sliding support member 700 may be drawn out and fixed as much as a suitable length as required.

In addition, the bookholder of the present invention may be additionally supported with the use of the support string 730 by hanging the support string 730 on the neck or the shoulder of the user. That is to say, the support string 730 may be supported around the neck or the shoulder by connecting it to at least one ring 732 mounted to the sliding support member 700. In this case, a hooking unit (not shown) having easy detachment function is prepared to the support string 730, thereby facilitating easy connection between the support string 730 and the ring 732. In addition, for more stable support, the support string 730 is preferably connected to a ring 732 which is positioned at a substantial center between the upper end of the bookholder and the end of the drawn sliding support member 700.

According to the present invention, in order to support the bookholder better, the auxiliary support arms 740 may be used. That is to say, if the auxiliary support arms 740 are spread and then put on the body of the user with suitable bending of the joints 742, the bookholder may be supported more stably without lateral shaking.

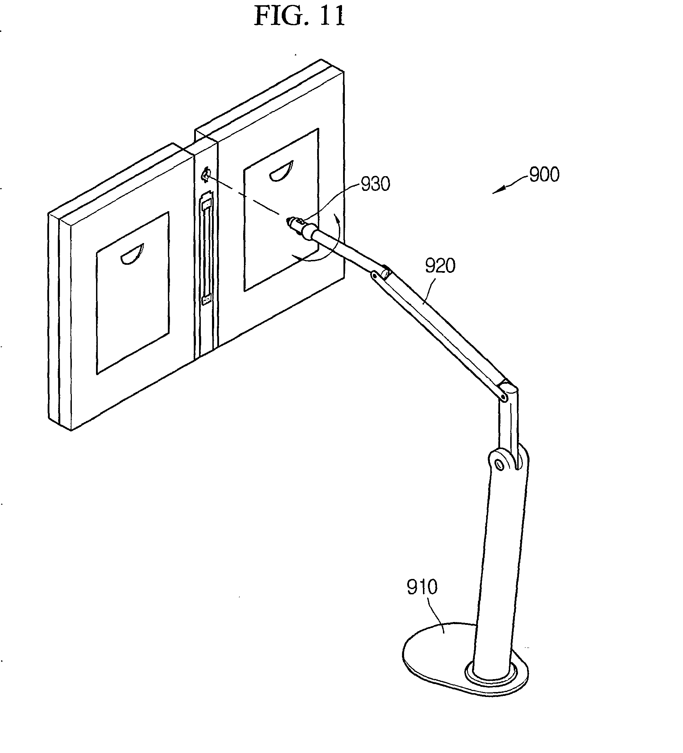

FIG. 11 shows a stand for fixing the bookholder of the present invention. Referring to FIG. 11, the bookholder may be selectively combined to a stand 900 of a predetermined structure.

The stand 900 includes a base 910, an arm 920 extended from the base 910 and having plural joints for free movement, and a connector 930 prepared at the end of the arm 920 and combined with the bookholder.

The base 910 has sufficient weight and size so that the bookholder combined to the stand does not fall down, and a support clamp, not shown, may also be provided to the base. The arm 920 has at least two joints so that a user may read a book with the use of the bookholder in any posture. In addition, the connector 930 is configured to ensure power supply to the bookholder. For example, the power supply may be directly supplied from an external source to the illustrating unit. In addition, this process also may charge a power source 178 which is installed in the sidewall 102.

The present invention has been described in detail. However, it should be understood that the detailed description and specific examples, while indicating preferred embodiments of the invention, are given by way of illustration only, since various changes and modifications within the spirit and scope of the invention will become apparent to those skilled in the art from this detailed description.

### INDUSTRIAL APPLICABILITY

The universal bookholder of the present invention has effects as follows.

First, since the bookholder may be carried together with a book, the volume of the bookholder and the book is decreased than when they are carried separately. In addiction, a user may carry the book and the bookholder more easily.

Second, the book received in the cover members may be kept so that it may be open as it was. In addition, since the bookholder may store various pens and scratch papers, the bookholder is useful outdoors.

Third, the bookholder may be put on the human body stably even in a vehicle such as a subway or a bus.

Fourth, the bookholder may conveniently keep a book of a certain weight within a readable distance with its pages fixed without being supported by user's hand.

Fifth, the bookholder is useful while a user is moving, and the bookholder may also be put on a table. In addition, if being combined with a stand, the bookholder may be positioned within a readable distance by moving joints of the stand, so a user may read a book on the bookholder in various postures and at various angles. The bookholder even makes it possible that a user who is lying reads a book.

Sixth, the bookholder allows a user to read a book with the use of the illustrating unit mounted thereto without any separate light source in a dark place.

Seventh, since the cover members cover the book covers, a user can hide the book covers. In addition, the cover members give various visual effects according to user's taste.

## Claims

1. A bookholder comprising:
a pair of cover members (100, 200 / 300, 400) for forming an inner space to receive a book therein when being folded and for supporting both sides of the book when being unfolded;
a supporting unit (500, 800) combined between the pair of cover members (100, 200 / 300, 400) so as to be folded with respect to each cover member (100, 200 / 300, 400);
a string (510) longitudinally installed inside the supporting unit (500, 800) to fix the spine of the book;
a clamp (130, 330) mounted on the upper and/or lower end of the inner space of each cover member (100, 200 / 300, 400) for fixing the received book; and
a guide member (140) installed at the upper and/or lower end of the inner space of each cover member (100, 200 / 300, 400) so as to move the clamp (130, 330).

2. A bookholder according to claim 1,
wherein the clamp (130, 330) has a lifting unit for selectively fixing a height of the clamp (130, 330) depending on a thickness of the book.

3. A bookholder according to claim 2,
wherein the lifting unit comprises a first block (332), and a second block (334) in which the first block(332) selectively moves up and down.

4. A bookholder according to claim 3,
wherein the first block (332) includes a hooking protrusion (336a) at one side; and
wherein the second block (334) has teeth (338) which are formed along the inner sidewall of the second block (334) so as to engage with the hooking protrusion (336a) selectively.

5. A bookholder according to claim 4, further comprising:
a release protrusion (336b) capable of controlling the locking between the hooking protrusion (336a) and the teeth (338); and
a spring (339) for ascending the first block (332).

6. A bookholder according to claim 3,
wherein the first block (332) includes an elastic hook (336) which has a hooking protrusion (336a) at one side and a release protrusion (336b) adjacent to the hooking protrusion (336a);
wherein the second block (334) has a guide slot (337) on its one sidewall and teeth (338) formed along the inner sidewall of the second block (334); and
wherein the bookholder further comprises a spring (339) for ascending the first block (332).

7. A bookholder according to claim 1, further comprising a support piece (350) selectively connecting to the opposite clamps for holding a book inside the cover members (100, 200 / 300, 400).

8. A bookholder according to claim 1,
wherein the clamp (130, 330) has a protrusion pressing unit (132) whose one end is pivotally combined to a front end of the clamp.

9. A bookholder according to claim 8,
wherein the protrusion pressing unit (132) is combined with an elastic member (134) so as to be elastically pivotal.

10. A bookholder according to claim 1, further comprising:
a vertical guide (142) inside the cover member (100, 200 / 300, 400) so as to move a guide member (140) longitudinally.

11. A bookholder according to claim 10,
wherein a vertical guide (142) having teeth is formed on the inside of the cover member (100, 200 / 300, 400) longitudinally; and
an elastic protrusion (331) corresponding to the teeth is formed on the guide member (140) so that the elastic protrusion (331) is engaged at the selected position of the vertical guide (142).

12. A bookholder according to claim 1,
wherein the supporting unit (500, 800) has a support assembly (600) which is pivotally installed on the outside of the supporting unit (500, 800) by means of a hinge.

13. A bookholder according to claim 12,
wherein the support assembly (600) is received in a receiving groove which is formed along a longitudinal direction of the supporting unit (500, 800).

14. A bookholder according to claim 12, further comprising an inclination stand (615) which is pivotally mounted on the upper side of the supporting unit by means of a hinge.

15. A bookholder according to claim 1, further comprising a handle (620) which is installed on the outside of the supporting unit (500, 800) or the cover member (100, 200 / 300, 400).

16. A bookholder according to claim 1, further comprising a handle (620) which is installed on the outside of the cover member; and
wherein the handle (620) is made of elastic materials.

17. A bookholder according to claim 1, further comprising protrusions (150) inside the cover member (100, 200 / 300,400) for placing a writing implement therein.

18. A bookholder according to claim 1, further comprising a cover (160) which is openably installed on the outside of the cover member (100, 200 / 300, 400).

19. A bookholder according to claim 1, further comprising a receiving space in the cover member (100, 200 / 300, 400) so as to store stationery therein.

20. A bookholder according to claim 1, further comprising a locking unit (180) for keeping the cover members (100, 200 / 300, 400) unfolded.

21. A bookholder according to claim 20,
wherein the locking unit (180) keeps opening both the cover members (100, 200 / 300, 400) and the supporting unit (500, 800) horizontally.

22. A bookholder according to claim 20, wherein the locking unit (180) comprises:
at least one push hook (560) provided on either the supporting unit (500, 800) or the cover member (100, 200 / 300, 400); and
a hook groove (570) formed on either the cover member (100, 200 / 300, 400) or the supporting unit (500, 800) so that the push hook (560) is inserted therein.

23. A bookholder according to claim 20, wherein the locking unit (180) comprises:
a bar (182) installed on one of the cover members;
a hook groove (184) formed on the other one of the cover members (100, 200 / 300, 400) so that the bar (182) is inserted therein; and
a switch (186) for biasing the bar (182) toward the hook groove (184).

24. A bookholder according to claim 1,
wherein the supporting unit (500, 800) has a position fixing unit (530) so as to adjust a length of the string (510) depending on a size of the book.

25. A bookholder according to claim 1,
wherein the one end of the string (510) is fixed to the supporting unit (500, 800); wherein the other end of the string (510) is combined with a position fixing pin (532); and
wherein the supporting unit (500, 800) has a position fixing groove (512) so as to fix the position fixing pin (532) therein for adjusting a length of the string (510).

26. A bookholder according to claim 1,
wherein the supporting unit (500, 800) has a width which is selectively extendable depending on a thickness of the book.

27. A bookholder according to claim 1,
wherein the supporting unit (800) includes movable plates (810, 820) and a fixed plate (830) whose both ends selectively combine to the movable plates (810, 820);
wherein the movable plates (810, 820) has hooks (812, 822); and
wherein the fixed plate (830) has hooking grooves (832) on its surface.

28. A bookholder according to claim 1, further comprising:
at least one support plate (110, 210 / 310, 410) combined to an inner side of the cover member (100, 200 / 300, 400) so as to support a book cover; and
an elastic member (112, 212) for elastically biasing the support plate (110, 210 / 310, 410) to hold up and support the book cover.

29. A bookholder according to claim 28,
wherein the support plate (110, 210 / 310, 410) has width and length extension units (326, 328 / 426, 428) which are selectively extendable according to a size of the book respectively.

30. A bookholder according to claim 28,
wherein the support plate (110, 210 / 310, 410) has an inclined portion (324) for supporting an inclined book cover and a flat portion (322) bent from the inclined portion for supporting the book cover.

31. A bookholder according to claim 28, further comprising a recess (315, 415) inside the cover member (100, 200 / 300, 400) so as to receive the support plate (110, 210 / 310, 410) therein.

32. A bookholder according to claim 31, further comprising a hooking member (329) inside the cover member (100, 200 / 300, 400) so as to lock the support plate (110, 210 / 310, 410) which is received in the recess (315, 415) when not in use.

33. A bookholder according to claim 1,
wherein the supporting unit (500, 800) has an inner space of which one end has an opening; and
wherein the bookholder further comprises:
a sliding support member (700) received in the inner space of the supporting unit (500, 800) to slide into or out through the opening.

34. A bookholder according to claim 33, further comprising at least one ring (732) formed on the sliding support member (700) to connect a support string (730).

35. A bookholder according to claim 33, further comprising a pair of auxiliary support arms (740) installed on both sides of the sliding support member (700) and capable of being bent.

36. A bookholder according to claim 1,
wherein the supporting unit (500, 800) has an inner space of which one end has an opening; and
wherein the bookholder further comprises:
a case (630) provided in the supporting unit (500, 800) and having an opening corresponding to the opening of the supporting unit (500, 800); and
a support assembly (600) having a sliding support member (700) received in the inner space of the case (630) and sliding into or out through the opening of the supporting unit (500, 800), wherein the support assembly (600) is pivotally combined to the supporting unit (500, 800).

37. A bookholder according to claim 1, further comprising an illuminating unit (170, 340) for emitting light toward the book received inside the cover members (100, 200 / 300, 400).

38. A bookholder according to claim 37, further comprising an insertion groove (104) inside the cover member (100, 200 / 300, 400) so as to receive the illuminating unit (170, 340)) therein.

39. A bookholder according to claim 37,
wherein the illuminating unit (170, 340) is detachably installed at one or both sides of the cover members (100, 200 / 300, 400).

40. A bookholder according to claim 37, further comprising a power source (178) which is installed in the cover member (100, 200 / 300, 400).

## Patentansprüche

1. Buchhalterung, umfassend ein Paar Deckelelemente (100, 200 / 300, 400) zur Ausbildung eines Innenraumes, um darin ein Buch aufzunehmen, wenn dieses zusammengelegt ist und zur Unterstützung beider Buchseiten, wenn das Buch aufgeschlagen ist; eine Trägereinheit (500, 800), die zwischen dem Paar der Deckelelemente (100, 200 / 300, 400) vorgesehen ist, um gegen jedes der Deckelelemente (100, 200 / 300, 400) geklappt zu werden; eine Schnur (510), die longitudinal in der Trägereinheit (500, 800) vorgesehen ist, um den Buchrücken zu fixieren; eine Klemme (130, 330), die am oberen und/oder unteren Ende des Innenraumes jedes Deckelelements (100, 200 / 300, 400) angebracht ist, um das aufgenommene Buch zu fixieren; ein Führungselement (140), das am oberen und/oder unteren Ende des Innenraumes jedes Deckelelements vorgesehen ist, um die Klemme (130, 330) zu bewegen.

2. Buchhalterung nach Anspruch 1, wobei die Klemme (130, 330) eine Hebeeinheit zum wählbaren Feststellen der Höhe der Klemme (130, 330) in Abhängigkeit von der Dicke des Buches aufweist.

3. Buchhalterung nach Anspruch 2, wobei die Hebeeinheit einen ersten Block (332) und einen zweiten Block (334) umfasst, in welchem der erste Block (332) wählbar nach oben und unten beweglich ist.

4. Buchhalterung nach Anspruch 3, wobei der erste Block (332) einen Einhängevorsprung (336a) auf einer Seite einschließt und wobei der zweite Block (334) Zähne (338) aufweist, die entlang der inneren Seitenwand des zweiten Blocks (334) ausgebildet sind, um in den Einhängevorsprung (336a) wählbar einzugreifen.

5. Buchhalterung nach Anspruch 4, die weiter einen Lösevorsprung (336b), der zum Bedienen der Blockierung zwischen dem Einhängevorsprung (336a) und den Zähnen (338) befestigt ist und eine Feder (339) zum Hochheben des ersten Blocks (332) umfasst.

6. Buchhalterung nach Anspruch 3, wobei der erste Block (332) einen elastischen Haken (336) mit einem Einhängevorsprung (336a) auf einer Seite und einem Lösevorsprung (336b) in Nachbarschaft zum Einhängevorsprung (336a) aufweist; wobei der zweite Block (334) einen Führungseinschnitt (337) auf einer Seitenwand und Zähne (338) aufweist, die entlang der inneren Seitenwand des zweiten Blocks (334) ausgebildet sind, wobei die Buchhalterung weiter eine Feder (339) zum Hochheben des ersten Blocks (332) umfasst.

7. Buchhalterung nach Anspruch 1, die außerdem ein Trägerteil (350) umfasst, das sich wählbar mit den gegenüberliegenden Klemmen zum Halten eines Buchs innerhalb der Deckelelemente (100, 200 / 300, 400) verbinden lässt.

8. Buchhalterung nach Anspruch 1, wobei die Klemme (330) eine vorstehende Presseinheit (132) umfasst, wobei ein Ende davon an einem Vorderende der Klemme drehbar angebracht ist.

9. Buchhalterung nach Anspruch 8, wobei die vorstehende Presseinheit (132) an einem elastischen Element (134) angebracht ist, um elastisch drehbar zu sein.

10. Buchhalterung nach Anspruch 1, die außerdem eine vertikale Führung (142) in dem Deckelelement (100, 200 / 300, 400) umfasst, um das Führungsteil (145) longitudinal zu bewegen.

11. Buchhalterung nach Anspruch 10, wobei eine Zähne aufweisende vertikale Führung (142) auf der Innenseite des Deckelelements (100, 200 / 300, 400) longitudinal ausgebildet ist, und ein elastischer Vorsprung (331) entsprechend den Zähnen auf dem Führungsteil (145) ausgebildet ist, so dass der elastische Vorsprung (331) in die vertikale Führung (142) in der gewählten Position eingreift.

12. Buchhalterung nach Anspruch 1, wobei die Trägereinheit (500, 800) eine Trägeranordnung (600) aufweist, die drehbar auf der Außenseite der Trägereinheit (500, 800) über ein Gelenk angebracht ist.

13. Buchhalterung nach Anspruch 12, wobei die Trägeranordnung (600) sich in einer Aufnahmeaussparung befindet, die längslaufend in der Trägereinheit (500, 800) ausgebildet ist.

14. Buchhalterung nach Anspruch 12, die außerdem einen Neigungsständer (615) umfasst, der drehbar an der Oberseite der Trägereinheit über ein Gelenk angebracht ist.

15. Buchhalterung nach Anspruch 1, die außerdem einen Griff (620) umfasst, der an der Außenseite der Trägereinheit (500, 800) oder des Deckelelements (100, 200 / 300, 400) angebracht ist.

16. Buchhalterung nach Anspruch 1, die außerdem einen Griff (620) umfasst, der an der Außenseite des Deckelelements angebracht ist und wobei der Griff (620) aus elastischen Materialien hergestellt ist.

17. Buchhalterung nach Anspruch 1, die außerdem Vorsprünge (150) innerhalb der Deckelelemente (100, 200 / 300, 400) umfasst, um ein Schreibgerät dazwischen einzuklemmen.

18. Buchhalterung nach Anspruch 1, die außerdem einen Deckel (160) umfasst, der öffnungsfähig auf der Außenseite des Deckelelements (100, 200 / 300, 400) angebracht ist.

19. Buchhalterung nach Anspruch 1, die außerdem eine Aufnahmeaussparung in dem Deckelelement (100, 200 / 300, 400) umfasst, um darin Bürobedarf unterzubringen.

20. Buchhalterung nach Anspruch 1, die außerdem eine Feststelleinheit (180) umfasst, um die Deckelelemente (100, 200 / 300, 400) aufgeschlagen zu halten.

21. Buchhalterung nach Anspruch 20, wobei die Feststelleinheit (180) sowohl die Deckelelemente (100, 200 / 300, 400) als auch die Trägereinheit (500, 800) horizontal offen hält.

22. Buchhalterung nach Anspruch 20, wobei die Feststelleinheit (180) mindestens einen Schiebehaken (560), der entweder auf der Trägereinheit (500, 800) oder dem Deckelelement (100, 200 / 300, 400) angeordnet ist, und eine Hakenaussparung (570) umfasst, die entweder in dem Deckelelement (100, 200 / 300, 400) oder der Trägereinheit (500, 800) ausgebildet ist, so dass der Schiebehaken (560) darin eingreift.

23. Buchhalterung nach Anspruch 20, wobei die Feststelleinheit (180) einen an einem der Deckelelemente (100, 200 / 300, 400) angebrachten Stab (182), eine Einführaussparung (184), die in dem anderen Deckelelement (100, 200 / 300, 400) ausgebildet ist, so dass der Stab (182) darin eingeführt wird, und einen Schieber (186) umfasst, um den Stab (182) in Richtung der Einführaussparung (184) zu verschieben.

24. Buchhalterung nach Anspruch 1, wobei die Trägereinheit (500, 800) eine Positionsfixierungseinheit (530) aufweist, um die Länge der Schnur (510) in Abhängigkeit von der Größe des Buches einzustellen.

25. Buchhalterung nach Anspruch 1, wobei das eine Ende der Schnur (510) mit der Trägereinheit (500, 800) verbunden ist, wobei das andere Ende der Schnur (510) mit einem Positionsfixierungsstift (532) verbunden ist und wobei die Trägereinheit (500, 800) eine Positionsfixierungsaussparung (512) aufweist, so dass der Positionsfixierungsstift (532) darin fixiert werden kann, um die Länge der Schnur (510) einzustellen.

26. Buchhalterung nach Anspruch 1, wobei die Trägereinheit (500, 800) eine Breite aufweist, die in Abhängigkeit der Dicke des Buches wählbar erweiterbar ist.

27. Buchhafterung nach Anspruch 1, wobei die Trägereinheit (800) bewegliche Platten (810, 820) und eine fixierte Platte (830) enthält, dessen beide Enden wählbar mit den beweglichen Platten (810, 820) verbunden werden können, wobei die beweglichen Platten (810, 820) Haken (812) aufweisen und wobei die fixierte Platte (830) hakenförmige Aussparungen (832) auf ihrer Oberfläche aufweist.

28. Buchhalterung nach Anspruch 1, die außerdem mindestens eine Trägerplatte (110, 210 / 310, 410), die auf der Innenseite der Deckelelemente (100, 200 / 300, 400) angebracht ist, um einen Buchdeckel zu unterstützen, und ein elastisches Element (112, 212) umfasst, um die Trägerplatte (110, 210 / 310, 410) elastisch einzustellen, so dass der Buchdeckel oben gehalten und unterstützt wird.

29. Buchhalterung nach Anspruch 28, wobei die Trägerplatte (110, 210 / 310, 410) Breiten- und Längenerweiterungseinheiten (326, 328 / 426, 428) aufweist, die jeweils entsprechend der Größe des Buches wählbar erweiterbar sind.

30. Buchhalterung nach Anspruch 28, wobei die Trägerplatte (110, 210 / 310, 410) einen geneigten Teil (324) zur Stützung eines geneigten Buchdeckels und einen flachen Teil (322) aufweist, der von dem geneigten Teil zur Stützung des Buchdeckels gebogen ist.

31. Buchhalterung nach Anspruch 28, die außerdem eine Mulde (315, 415) in dem Deckelelement (100, 200 / 300, 400) umfasst, um darin die Trägerplatte (110, 210 / 310, 410) aufzunehmen.

32. Buchhalterung nach Anspruch 31, die außerdem ein Hakenelement (329) in dem Deckelelement (100, 200 / 300, 400) umfasst, um die Trägerplatte (110, 210 / 310, 410), welche von der Mulde (315, 415) aufgenommen wird, festzuhalten, wenn sie nicht verwendet wird.

33. Buchhalterung nach Anspruch 1, wobei die Trägereinheit (500, 800) einen Innenraum aufweist, dessen eines Ende eine Öffnung aufweist und wobei die Buchhalterung außerdem ein Gleitträgerelement (700) umfasst, das im Innenraum der Trägereinheit (500, 800) aufgenommen wird, um durch die Öffnung hinaus oder hinein zu gleiten.

34. Buchhalterung nach Anspruch 33, die außerdem mindestens einen Ring (732) umfasst, der auf dem Gleitträgerelement (700) ausgebildet ist, um eine Trageschnur (730) zu befestigen.

35. Buchhalterung nach Anspruch 33, die außerdem ein paar Hilfsträgerarme (740) umfasst, die an beiden Seiten des Gleitträgerelements (700) angebracht sind und abgewinkelt werden können.

36. Buchhalterung nach Anspruch 1, wobei die Trägereinheit (500, 800) einen Innenraum aufweist, dessen eines Ende eine Öffnung aufweist und wobei die Buchhalterung außerdem ein Gehäuse (630), das in der Trägereinheit (500,800) angeordnet ist und eine Öffnung aufweist, die der Öffnung der Trägereinheit (500, 800) entspricht und eine Trägeranordnung (600) umfasst, die ein Gleitträgerelement (700) aufweist, das im Innenraum des Gehäuses (630) aufgenommen wird und durch die Öffnung der Trägereinheit (500, 800) hinaus oder hinein gleitet, wobei die Trägeranordnung (600) drehbar mit der Trägereinheit (500, 800) verbunden ist.

37. Buchhalterung nach Anspruch 1, die außerdem eine Beleuchtungseinheit (170, 340) umfasst, um Licht in Richtung des Buches auszusenden, das in den Deckelelementen (100, 200 / 300, 400) aufgenommen wird.

38. Buchhalterung nach Anspruch 37, die außerdem eine Einlagemulde (104) in dem Deckelelement (100, 200 / 300, 400) umfasst, um darin die Beleuchtungseinheit (170, 340) aufzunehmen.

39. Buchhalterung nach Anspruch 37, wobei die Beleuchtungseinheit (170, 340) abnehmbar an einer oder beiden Seiten der Deckelelemente (100, 200 / 300, 400) angebracht ist.

40. Buchhalterung nach Anspruch 37, die außerdem eine Stromquelle (178) umfasst, die im Deckelelement (100, 200 / 300, 400) angebracht ist.

## Revendications

1. Porte-livre comprenant :
une paire d'éléments de couverture (100, 200 / 300, 400) pour former un espace interne afin de recevoir un livre à l'intérieur de celui-ci lorsqu'il est plié et pour supporter les deux côtés du livre lorsqu'il est déplié ;
une unité de support (500, 800) combinée entre la paire d'éléments de couverture (100, 200 / 300, 400) afin d'être pliée par rapport à chaque élément de couverture (100, 200 / 300, 400) ;
une ficelle (510) installée de manière longitudinale à l'intérieur de l'élément de support (500, 800) afin de fixer l'arête du livre ;
un dispositif de serrage (130, 330) monté sur l'extrémité supérieure et/ou inférieure de l'espace interne de chaque élément de couverture (100, 200 / 300, 400) afin de fixer le livre reçu ; et
un élément de guidage (140) installé au niveau de l'extrémité supérieure et/ou inférieure de l'espace interne de chaque élément de couverture (100, 200 / 300, 400) afin de déplacer le dispositif de serrage (130, 330).

2. Porte-livre selon la revendication 1, dans lequel le dispositif de serrage (130, 330) a une unité de levage pour déterminer de manière sélective une hauteur du dispositif de serrage (130, 330) en fonction d'une épaisseur du livre.

3. Porte-livre selon la revendication 2, dans lequel l'unité de levage comprend un premier bloc (332) et un second bloc (334) dans lequel le premier bloc (332) monte et descend sélectivement.

4. Porte-livre selon la revendication 3, dans lequel le premier bloc (332) comprend une saillie d'accrochage (336a) d'un côté ; et
dans lequel le second bloc (334) a des dents (338) qui sont formées le long de la paroi latérale interne du second bloc (334) afin de se mettre en prise avec la saillie d'accrochage (336a) de manière sélective.

5. Porte-livre selon la revendication 4, comprenant en outre :
une saillie de déblocage (336b) pouvant contrôler le blocage entre la saillie d'accrochage (336a) et les dents (338) ; et
un ressort (339) pour faire monter le premier bloc (332).

6. Porte-livre selon la revendication 3, dans lequel le premier bloc (332) comprend un crochet élastique (336) qui a une saillie d'accrochage (336a) d'un côté et une saillie de déblocage (336b) adjacente à la saillie d'accrochage (336a) ;
dans lequel le second bloc (334) a une fente de guidage (337) sur sa paroi latérale et des dents (338) formées le long de la paroi latérale interne du second bloc (334) ; et
dans lequel le porte-livre comprend en outre un ressort (339) pour faire monter le premier bloc (332).

7. Porte-livre selon la revendication 1, comprenant en outre une pièce de support (350) se raccordant de manière sélective aux dispositifs de serrage opposés pour maintenir un livre à l'intérieur des éléments de couverture (100, 200 / 300, 400).

8. Porte-livre selon la revendication 1, dans lequel le dispositif de serrage (130, 330) a une unité de pression de saillie (132) dont une extrémité est combinée de manière pivotante à une extrémité avant du dispositif de serrage.

9. Porte-livre selon la revendication 8, dans lequel l'unité de pression de saillie (132) est combinée avec un élément élastique (134) afin de pivoter de manière élastique.

10. Porte-livre selon la revendication 1, comprenant en outre un guide vertical (142) à l'intérieur de l'élément de couverture (100, 200 / 300, 400) afin de déplacer un élément de guidage (140) de manière longitudinale.

11. Porte-livre selon la revendication 10, dans lequel un élément de guidage (142) ayant des dents, est formé sur l'intérieur de l'élément de couverture (100, 200 / 300, 400) de manière longitudinale ; et
une saillie élastique (331) correspondant aux dents est formée sur l'élément de guidage (140) de sorte que la saillie élastique (331) est mise en prise dans la position sélectionnée du guide vertical (142).

12. Porte-livre selon la revendication 1, dans lequel l'unité de support (500, 800) a un ensemble de support (600) qui est installé de manière pivotante sur l'extérieur de l'unité de support (500, 800) au moyen d'une charnière.

13. Porte-livre selon la revendication 12, dans lequel l'ensemble de support (600) est reçu dans une rainure de réception qui est formée le long d'une direction longitudinale de l'unité de support (500, 800).

14. Porte-livre selon la revendication 12, comprenant en outre un socle d'inclinaison (615) qui est monté de manière pivotante sur le côté supérieur de l'unité de support au moyen d'une charnière.

15. Porte-livre selon la revendication 1, comprenant en outre une poignée (620) qui est installée sur l'extérieur de l'unité de support (500, 800) ou de l'élément de couverture (100, 200 / 300, 400).

16. Porte-livre selon la revendication 1, comprenant en outre une poignée (620) qui est installée sur l'extérieur de l'élément de couverture ; et
dans lequel la poignée (620) est faite de matériaux élastiques.

17. Porte-livre selon la revendication 1, comprenant en outre des saillies (150) à l'intérieur de l'élément de couverture (100, 200 / 300, 400) pour placer un instrument d'écriture à l'intérieur de celui-ci.

18. Porte-livre selon la revendication 1, comprenant en outre une couverture (160) qui est installée de manière à pouvoir s'ouvrir sur l'extérieur de l'élément de couverture (100, 200 / 300, 400).

19. Porte-livre selon la revendication 1, comprenant en outre un espace de réception dans l'élément de couverture (100, 200 / 300, 400) afin de stocker du papier à lettre à l'intérieur de celui-ci.

20. Porte-livre selon la revendication 1, comprenant en outre une unité de blocage (180) pour maintenir les éléments de couverture (100, 200 / 300, 400) dépliés.

21. Porte-livre selon la revendication 20, dans lequel l'unité de blocage (180) maintient ouvert à la fois les éléments de couverture (100, 200 / 300, 400) et l'unité de support (500, 800) de manière horizontale.

22. Porte-livre selon la revendication 20, dans lequel l'unité de blocage (180) comprend :
au moins un crochet de poussée (560) prévu soit sur l'unité de support (500, 800) soit sur l'élément de couverture (100, 200 / 300, 400) ; et
une rainure de crochet (570) formée soit sur l'élément de couverture (100, 200 / 300, 400) soit sur l'unité de support (500, 800) de sorte que le crochet de poussée (560) y est inséré.

23. Porte-livre selon la revendication 20, dans lequel l'unité de blocage (180) comprend :
une barre (182) installée sur l'un des éléments de couverture ;
une rainure de crochet (184) formée sur l'autre élément de couverture (100, 200 / 300, 400) de sorte que la barre (182) y est insérée; et
un commutateur (186) pour orienter la barre (182) vers la rainure de crochet (184).

24. Porte-livre selon la revendication 1, dans lequel l'unité de support (500, 800) a une unité de fixation de position (530) afin d'ajuster une longueur de la ficelle (510) en fonction d'une taille du livre.

25. Porte-livre selon la revendication 1, dans lequel une extrémité de la ficelle (510) est fixée sur l'unité de support (500, 800) ;
dans lequel l'autre extrémité de la ficelle (510) est combinée avec une broche de fixation de position (532) ; et
dans lequel l'unité de support (500, 800) a une rainure de fixation de position (512) afin d'y fixer la broche de fixation de position (532) pour ajuster une longueur de la ficelle (510).

26. Porte-livre selon la revendication 1, dans lequel l'unité de support (500, 800) a une largeur qui est extensible sélectivement en fonction d'une épaisseur du livre.

27. Porte-livre selon la revendication 1, dans lequel l'unité de support (800) comprend des plaques mobiles (810, 820) et une plaque fixe (830) dont les deux extrémités se combinent sélectivement aux plaques mobiles (810, 820) ;
dans lequel les plaques mobiles (810, 820) ont des crochets (812, 822) ; et
dans lequel la plaque fixe (830) a des rainures d'accrochage (832) sur sa surface.

28. Porte-livre selon la revendication 1, comprenant en outre :
au moins une plaque de support (110, 210 / 310, 410) combinée à un côté interne de l'élément de couverture (100, 200/ 300, 400) afin de supporter une couverture de livre ; et
un élément élastique (112, 212) pour orienter élastiquement la plaque de support (110, 210 / 310, 410) pour lever et supporter la couverture de livre.

29. Porte-livre selon la revendication 28, dans lequel la plaque de support (110, 210 / 310, 410) a des unités d'extension de largeur et de longueur (326, 328 / 426, 428) qui sont sélectivement extensibles en fonction d'une taille du livre respectivement.

30. Porte-livre selon la revendication 28, dans lequel la plaque de support (110, 210 / 310, 410) a une partie inclinée (324) pour supporter une couverture de livre inclinée et une partie plate (322) pliée à partir de la partie inclinée afin de supporter la couverture de livre.

31. Porte-livre selon la revendication 28, comprenant en outre un évidement (315, 415) à l'intérieur de l'élément de couverture (100, 200 / 300, 400) afin d'y recevoir la plaque de support (110, 210 / 310, 410).

32. Porte-livre selon la revendication 31, comprenant en outre un élément d'accrochage (329) à l'intérieur de l'élément de couverture (100, 200 / 300, 400) afin de bloquer la plaque de support (110, 210 / 310, 410) qui est reçue dans l'évidement (315, 415) quand elle n'est pas utilisée.

33. Porte-livre selon la revendication 1, dans lequel l'unité de support (500, 800) a un espace interne dont une extrémité a une ouverture ; et
dans lequel le porte-livre comprend en outre :
un élément de support coulissant (700) reçu dans l'espace interne de l'unité de support (500, 800) pour coulisser à l'intérieur et à l'extérieur à travers l'ouverture.

34. Porte-livre selon la revendication 33, comprenant en outre au moins une bague (732) formée sur l'élément de support coulissant (700) pour raccorder une ficelle de support (730).

35. Porte-livre selon la revendication 33, comprenant en outre une paire de bras de support auxiliaires (740) installés des deux côtés de l'élément de support coulissant (700) et pouvant être pliés.

36. Porte-livre selon la revendication 1, dans lequel l'unité de support (500, 800) a un espace interne dont une extrémité a une ouverture ; et
dans lequel le porte-livre comprend en outre :
un boîtier (630) prévu dans l'unité de support (500, 800) et ayant une ouverture correspondant à l'ouverture de l'unité de support (500, 800) ; et
un ensemble de support (600) ayant un élément de support coulissant (700) reçu dans l'espace interne du boîtier (630) et coulissant à l'intérieur ou à l'extérieur à travers l'ouverture de l'unité de support (500, 800), dans lequel l'ensemble de support (600) est combiné de manière pivotante à l'unité de support (500, 800).

37. Porte-livre selon la revendication 1, comprenant en outre une unité d'éclairage (170, 340) pour émettre de la lumière vers le livre reçu à l'intérieur des éléments de couverture (100, 200 / 300, 400).

38. Porte-livre selon la revendication 37, comprenant en outre une rainure d'insertion (104) à l'intérieur de l'élément de couverture (100, 200 / 300, 400) afin d'y recevoir l'unité d'éclairage (170, 340).

39. Porte-livre selon la revendication 37, dans lequel l'unité d'éclairage (170, 340) est installée de manière détachable au niveau d'un ou des deux côtés des éléments de couverture (100, 200 / 300, 400).

40. Porte-livre selon la revendication 37, comprenant en outre une source de puissance (178) qui est installée dans l'élément de couverture (100, 200 / 3 00, 400).
